# EUROPEAN PATENT SPECIFICATION

(11) **EP 1 908 265 B1**
(45) Date of publication and mention of the grant of the patent: **01.09.2010**
(21) Application number: 06764983.0
(22) Date of filing: 17.07.2006
(51) Int. Cl.: H04M 3/22

(54) **METHOD OF COMPILING A LIST OF IDENTIFIERS ASSOCIATED WITH A MOBILE DEVICE USER**
VERFAHREN ZUM ZUSAMMENSTELLEN EINER LISTE VON MIT EINEM MOBILGERÄTEBENUTZER ASSOZIIERTEN KENNUNGEN
PROCÉDÉ PERMETTANT DE COMPILER UNE LISTE D IDENTIFICATEURS ASSOCIÉS À UN UTILISATEUR DE DISPOSITIF MOBILE

(30) Priority: 22.07.2005 GB 0515123
(43) Date of publication of application: 09.04.2008
(73) Proprietor: M.M.I. Research Limited, Wimborne, Dorset BH21 2BJ (GB)
(72) Inventor: PRIDMORE, Andrew Paul, M.M.I. Research Limited, London EC1V 4PY (GB); MARTIN, Paul Maxwell, M.M.I. Research Limited, London EC1V 4PY (GB); TIMSON, Anthony Richard, M.M.I. Research Limited, London EC1V 4PY (GB)
(74) Representative: Ribeiro, James Michael
(86) International application number: PCT/GB2006/002641
(87) International publication number: WO 2007/010225

(56) References cited:
- EP-A- 0 711 090
- EP-A- 1 051 053
- EP-A- 1 441 493
- WO-A-00/41409
- WO-A-03/088634
- US-A1- 2002 120 873
- US-B1- 6 427 073

## Description

The present invention relates to a method and apparatus for compiling a list of IDs associated with a mobile device user.

A conventional mobile phone user possess both hardware (the mobile station or MS) and an identity module (the SIM card). A SIM card must be inserted in the MS before outgoing calls (except emergency calls) can be made. The SIM card carries an identity known as the International Mobile Subscriber Identity (IMSI) which is the identity related to the "phone number" (more accurately MSISDN). Therefore whenever a MSISDN number is dialled, the network searches for the MS that has the related IMSI in order to route the call. The IMSI can be inserted in any compatible phone and the call is then routed to that device.

The mobile phone network also uses a separate identity, the International Mobile Equipment Identity (IMEI). This is unique to each MS and is set on manufacture. The IMEI therefore uniquely identifies the particular MS.

The operator of an identity tracker typically wishes to track the activities of a particular person. This person may operate multiple MSs and SIM cards, regularly swapping SIM cards between MSs. Therefore to track the activities of such a person, the operator must:
1 obtain all IMSIs and IMEIs operated by that person over a particular time interval; and
2 track the pairing of IMSIs and IMEIs over a particular time interval.

WO 03/088634 provides a method of so-called "infection-based monitoring" in which a SIM card "infects" mobile phones with which it is used, or equivalently a mobile phone "infects" SIM cards with which it is used. More specifically, the method uses an IMSI as a key to identify multiple IMEIs each associated with that IMSI in a mobile device communication. However, if one of these identified IMEIs is then used with a different SIM card, this will not be picked up and the trail to a particular person will be lost. Equivalently, WO 03/088634 also describes a method in which an IMEI is used as a key to identify multiple IMSIs each associated with that IMEI in a communication. However, if one of these identified IMSIs is then used with a different mobile phone, this will not be picked up and the trail to a particular person will be lost.

A first aspect of the present invention provides a method of compiling a list of identifiers (IDs) associated with a mobile device user, as set out below in claims 1 and 2.

A second aspect of the invention provides a computer program product, as set out below in claims 6 and 7.

A third aspect of the invention provides apparatus for compiling a list of identifiers (IDs) associated with a mobile device user, as set out below in claims 8 and 9.

Embodiments of the present invention will now be described with reference to the accompanying drawings, in which:
Figure 1 is a schematic diagram showing a mobile station (MS) receiving multiple Broadcast Channels (BCH);
Figure 2 shows a SIMBTS and test mobile;
Figure 3 shows a method of compiling a list of IDs associated with a mobile device user;
Figure 4 shows the structure of the Family Database; and
Figure 5 shows a network of IMSI/IMEI pairs.

### Background

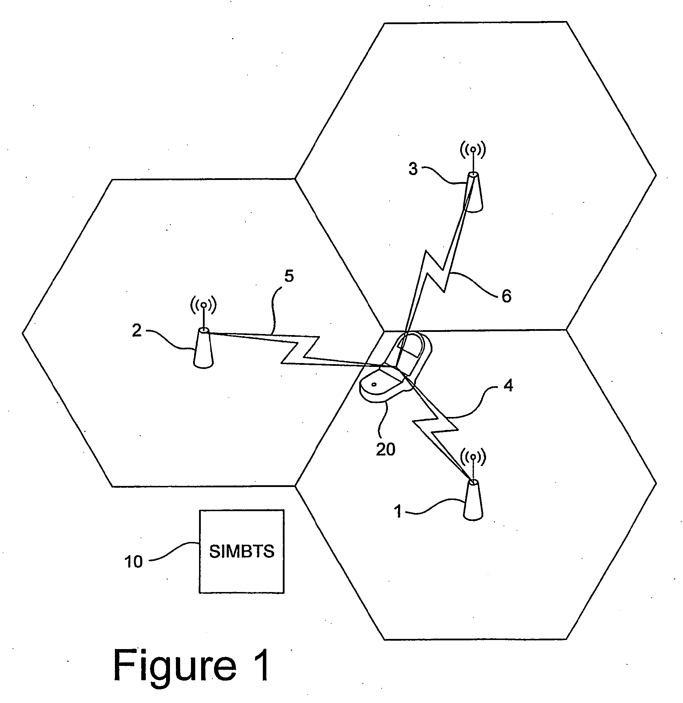

Conventional GSM mobiles use two algorithms known as C1 and C2 algorithms to decide on which base station (BTS) to camp. Camp is here defined as the BTS which is transmitting broadcast information to which the mobile is listening. This situation is illustrated in Figure 1 where three BTSs 1-3 are broadcasting on three unique BTS Broadcast Channels (BCH) 4-6. On moving into the vicinity of the three BTSs, a Mobile Station (MS) 20 evaluations on which BTS to camp. Once the camping decision is made, the mobile moves to receive the BCH from the chosen BTS as per the GSM specifications.

The mobile 20 may choose to actively register with the network through the chosen BTS if a Location Area boundary is crossed or if a network defined time has elapsed. The mobile 20 receives a list (the Broadcast Allocation or BA list) of neighbouring BTS broadcast frequencies from the camped BTS and is mandated to scan these broadcast channels for signal parameters. As a mobile moves, it calculates the C1 and C2 parameters based on the received signal strengths of the current BTS and the neighbouring BTSs contained in the BA list. If a hysteresis threshold is crossed, then the mobile will camp onto the new BTS with higher signal strength and/or signal quality (note this simplifies the actual process involved).

Taking the case of a single Location Area within an area of good GSM coverage; this Location Area will be served by several BTSs. Now considering a particular mobile phone; this will be camped on one of the BTSs serving the target area. The actual BTS on which the mobile is camped will depend on three parameters:
a) The received signal strengths (in the standards, RLA_C) of the serving BTSs at the location of the mobile phone.
b) The setting of the BCH parameters used by the C1 and C2 algorithms, including:
   RXLEV_ACCESS_MIN
   MS_TXPWR_MAX_CCH
   CELL_RESELECT_OFFSET (CRO)
   TEMPORARY OFFSET
   PENALTY_TIME
   CELL_RESELECT_HYSTERESIS (CRH)
c) The history of the location of the mobile phone, for example if the phone was camped on BTS 1 and has moved to a location where the signal strength from BTS 2 is greater (but less than CRH) then the phone will remain camped on BTS 1.

Due to point c), mobile phones present in a particular region of interest will be camped on many and perhaps all of the BTSs serving the region. Note also that there is a further complication which is that the BTSs serving a particular location will have differing BA lists. The consequence of this is that the mobile phones in a particular location will potentially be scanning different sets of broadcast frequencies. Although the BA lists are likely to overlap substantially, there will be differences.

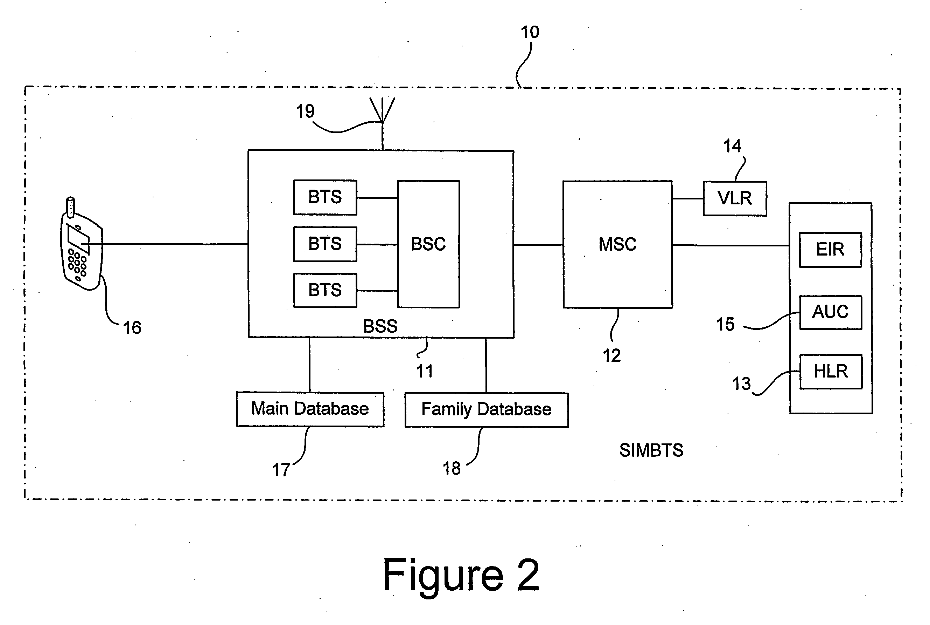

A Separately Introduced Multiple Base Station (SIMBTS) 10 is shown in Figure 1, and in detail in Figure 2. The principle aim of the SIMBTS is to interrogate all GSM mobile phones in a particular area in order to acquire their International Mobile Subscriber Identity (IMSI), International Mobile Equipment Identity (IMEI) and Temporary Mobile Subscriber Identity (TMSI) identities.

The SIMBTS 10 performs a subset of the functions of a complete GSM network, ranging from air interface protocol exchanges in the Base Station System (BSS) 11 to the switch oriented functions at the Mobile Switching Centre (MSC) 12 and security and authentication functions of the Home Location Register (HLR) 13, Visitor Location Register (VLR) 14 and Authentication Centre (AUC) 15.

Key to the practical application of the SIMBTS 10 is the speed of acquisition of the data. This enables the SIMBTS operator to spend the minimum amount of time in a particular area, speeding up operation and minimising the personal risk to the operator.

### IMSI/IMEI Acquisition

The SIMBTS 10 bypasses conventional GSM procedures to achieve the objective of obtaining all mobile identities from phones served by a particular operator. To do this, the following steps are performed:
1. The SIMBTS 10 forces a test mobile phone 16 (eg Ericsson TEMS) to obtain broadcast allocation lists (BA lists) from all BTSs serving a particular location and for all operators. The procedure is to:
   a) go to the BTS with the highest signal strength (BTS 1);
   b) obtain its BA list and cell parameters controlling the C1 and C2 algorithms;
   c) force the test mobile 16 to go to the first BTS in the BA list (BTS2) and obtain its BA list;
   d) continue until BA lists from a certain number of BTSs are obtained or, alternatively and in an enhanced algorithm, all BTSs with signal strengths within CRH dB of BTS 1 are obtained.
2. Compute the list of common BTSs (union) from all received BA lists passing the criterion mentioned in 1d) above (these constitute the complete set on which all mobiles in the area around the test mobile 16 are going to be camped from all network operators).
3. Emulate all BTSs in the common BTS (BA) list and obtain the mobile identities. Note that there are two possible methods to emulate BTSs: a) one at a time, and advantageously via an autonomous autorotation process; or, b) a considerable enhancement over a) is to emulate several BTSs simultaneously. The key advantage is the decreased time required to gain the IMSIs and IMEIs due to the parallel operation. This depends on the capabilities of the hardware and management software which must be carefully designed to avoid interference issues.

Note that to convey its identities, the mobile must perform a "location update". The mechanism for this is for a BTS in the current BA list received by the mobile, to be of higher than CRH signal strength than the current BTS. The mobile will then camp on the new BTS and, if the location area code (LAC) is different, it will perform a location update, thereby triggering an identity exchange.

The important point here is that the emulation of BTSs and acquisition of mobile identities can be automated. No operator interaction is required other than to start the process. Consequently the process can be high speed. Typically the location of the operators of this equipment is "difficult" and the key driver is to minimise the time to complete the operation.

The process in point a) above is illustrated in the table of operation given in Table 1.

**Table 1: Sequential Process for SIMBTS MS identity acquisition**

| **Step** | **Action** | **Result** |
|---|---|---|
| **1** | Use test phone 16 to perform steps 1 and 2 above to obtain list of BTSs with signal strength > CRH from Operator A, Operator B, Operator C etc for all local network operators. Alternatively a predetermined maximum number of BTSs (for instance four) may be selected for each operator. | List of BTSs Operator A: A1...A6 Operator B: B1...B4 Operator C:C1...C3 (for example) |
| **2** | For Operator A, choose BCH information from BTS A1 and use this to configure SIMBTS | SIMBTS emulates BTS A1 |
| **3** | Receive Location Updates from Operator A MSs | Produce list of identities |
| **4** | After either a) a preset time [t] or b) rate of MS Location Updates decreases to [n] LU per minute choose BCH information from BTS A2 and use this to configure SIMBTS | Completion of emulation of BTS and start emulation of new BTS |
| **5** | Repeat steps 3 and 4 until all Operator A BTSs in list have been emulated | Operator A emulation complete |
| **6** | Now switch to new operator (eg Operator B) and repeat steps 2 to 5 for Operator B, C... BTSs | All BTSs from all Operators have been emulated in area |

Thus, in summary the following sequence of steps is performed:
1. Obtain list of BTSs for Operator A
2. Obtain list of BTSs for Operator B
3. Obtain list of BTSs for Operator C
4. Emulate all BTSs in A list
5. Emulate all BTSs in B list
6. Emulate all BTSs in C list

Note that step 1 in Table 1 obtains BA lists from one BTS at a time. An enhanced technique for simultaneously obtaining BA lists from several BTSs takes step 1 in Table 1 and implements it simultaneously for several BTSs. These BTSs can be allocated as follows:
1 BA lists may be obtained by simultaneously interrogating Multiple BTSs for one Operator; or
2 BA lists may be obtained by simultaneously interrogating Multiple Operators; or
3 BA lists may be obtained by simultaneously interrogating Multiple Operators and Multiple BTSs per Operator.

Note that steps 2 to 5 in Table 1 are implemeneted for one BTS at a time. An enhanced technique for simultaneously emulating several BTSs takes steps 2 to 5 in Table 1 and implements them simultaneously for several BTSs. These BTSs can be allocated as follows:
1 Multiple BTSs for one Operator are simultaneously emulated; or
2 Multiple Operators are simultaneously emulated; or
3 Multiple Operators and Multiple BTSs per Operator are simultaneously emulated.

Simultaneous acquisition of BA lists, and simultaneous emulation require the SIMBTS to employ a multiband antenna 19 connected to multiband transmitter/receiver circuitry which can communicate simultaneously on multiple frequencies.

The allocation of BTSs to be emulated has to take into account conventional frequency planning considerations. This then governs how close the ARFCN spacing can be for simultaneous BTSs.

The advantage of simultaneous multiple emulation is that the identities of the local population of MSs can be acquired more quickly than with serial emulation. The factor of speed improvement is proportional to the number of BTSs emulated. Thus simultaneous emulation of four Operators will result in a factor of four speed improvement, all other conditions being equal.

An enhanced version of the process described above is to conditionally retain or reject mobiles as they register to the SIMBTS. The importance of this is that quickly rejecting mobiles, which are of no interest to the SIMBTS operator, back to their normal network operator minimises the impact for those mobiles. The SIMBTS is therefore of enhanced covertness due to the use of this technique. Specifically the MS user is very unlikely to notice that their phone is temporarily (for a few seconds) registering to the SIMBTS.

The detailed procedure is as follows:

**Table 2: Detailed MS Accept or Reject**

| **Step** | **Action** | **Result** |
|---|---|---|
| **1.** | SIMBTS is set up to cause mobiles to be attracted | |
| **2** | Mobile discovers SIMBTS | |
| **3** | MS evaluates C1/C2 and decides to perform Location Update | |
| **4** | Mobile performs Location Update | |
| **5** | Mobile submits [Location Update Request] message | |
| **6** | SIMBTS issues three identity challenges for IMSI, IMEI and TMSI | |
| **7** | SIMBTS receives three identities | |
| **8** | SIMBTS decides whether to accept or reject location update. Decision is dependent on whether any of the three identities is a target | |
| **9** | SIMBTS issues Location Update Accept or Reject dependent on step 8 | Mobile receives either LU-accept in which case it camps on SIMBTS or LU-reject in which case a standard GSM rejection message (such as "roaming not allowed in this location area") is sent to the MS which returns back to its home network. |

The method above enables the SIMBTS 10 to acquire a list of IMSIs and IMEIs. These IMSI/IMEI pairs are recorded in a Main Database 17 shown in Figure 2.

### SIM Tracking

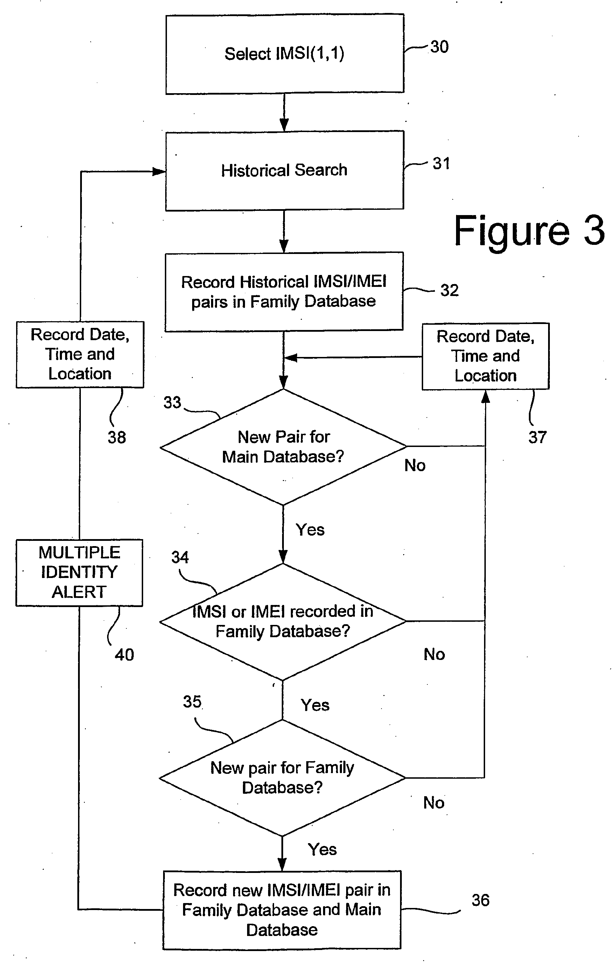

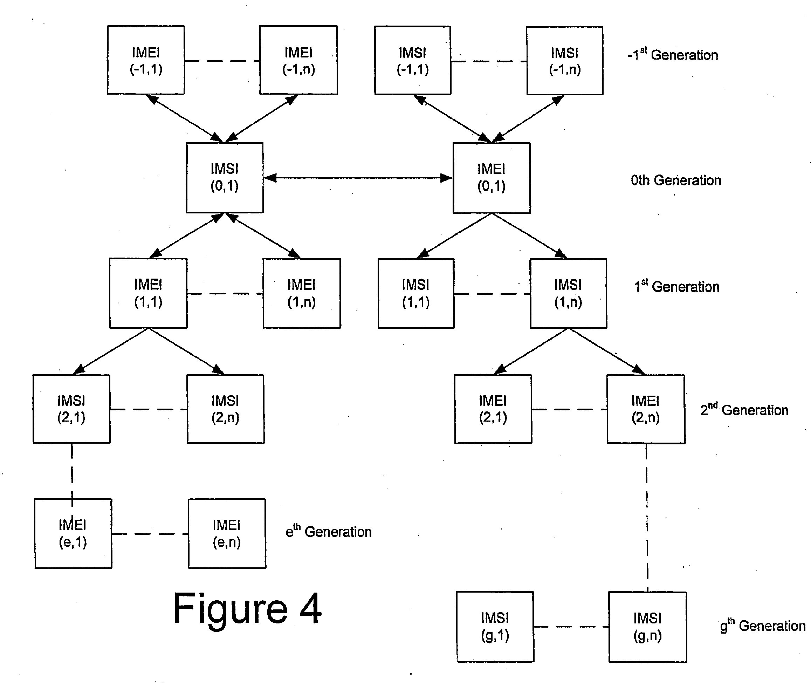

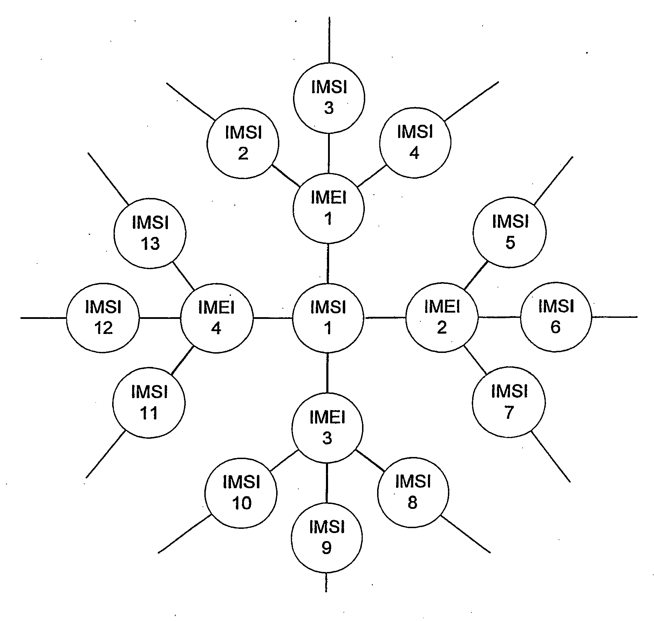

A method is now described which tracks IMSI/IMEI pairings for a selected IMSI or IMEI. The tracking process is shown in Figure 3. The pairings are recorded in a Family Database denoted 18 in Figure 2. The structure of the Family Database is shown in Figure 4, with direct associations between IDs indicated by double-headed arrows.

In step 30, an IMSI (denoted IMSI(0,1) in Figure 4) or an IMEI (denoted IMEI (0,1) in Figure 4)(0,1) is selected by a user of the SIMBTS 10. The nomenclature of Figure 4 is as follows:
- IMSI(x,y) denotes IMSI number y in generation x.
- IMEI(x,y) denotes IMEI number y in generation x.

For instance, IMSI(0,1) may be selected by contacting an operator and getting the MSISDN to IMSI lookup from the HLR. The selected IMSI(0,1) or IMEI (0,1) is recorded in the Family Database 18. In the discussion below, we assume that IMSI(0,1) is selected.

In step 31, the IMSI(0,1) is used as a key to perform a historical search of the Main Database for IDs which are either directly or indirectly associated with the IMSI(0,1). Thus, if IMSI(0,1) is recorded in the Main Database, then all the IMEIs which are directly associated with IMSI(0,1) in the Main Database are recorded in the Family Database. The most recently recorded IMEI is denoted IMEI(0,1), and the other IMEIs are denoted IMEI(-1,1), IMEI(-1,2) etc. As well as searching for directly associated IMEIs (that is, IMEIs which have been used with the IMSI(0,1) in a previous communication), the historical search 31 also searches the Main Database for IDs indirectly associated with IMSI(0,1) (that is, not directly associated with IMSI(0,1), but associated via IMEI(-1,1)...IMEI(-1,n) or IMEI(0,1)). Thus it can be seen from Figure 4 that the historical search builds a 0th generation (IMSI(0,1) and IMEI(0,1)) and a -1st generation (IMEI(-1,1)...IMEI(-1,n), IMSI(-1,1)...IMSI(-1,n). The historical search continues to propagate and construct further historical generations -2, -3 etc until no further associations are found.

In step 32, any associations are used to populate the Family Database 18. If the selected IMSI(0,1) has not previously been recorded in the Main Database, then the Historical Search returns a null result and no further data is recorded in the Family Database in step 32.

Running in parallel with the process of Figure 3, the SIMBTS 10 continuously scrolls through the method described above in the section headed "IMSI/IMEI Acquisition", updating the Main Database as it goes with IMEI/IMEI pairings. When a new IMSI/IMEI pair is detected, the IMSI/IMEI pair is stored in the Main Database in step 33. Note that a "new pair" is defined as either:
- a pair in which neither the IMSI nor the IMEI have previously been recorded in the Main Database; or
- a pair in which one of the IDs has been recorded in the Main Database, but not previously associated with the other ID in the pair; or
- a pair in which both of the IDs have been recorded in the Main Database, but not previously associated with each other.

If an IMSI/IMEI pair is not new, then the date, time and location is recorded at step 37. Thus the Main Database builds up a record of all dates, times and locations when/where a particular IMEI/IMEI pair was detected.

At step 34 a check is made of whether either the IMSI or the IMEI in the new pair are recorded in the Family Database. If not, then neither is of interest, so the process returns to step 33 via step 37. The location data is typically input by a user in alphanumeric format via a keyboard (not shown) of the SIMBTS.

If one or both IDs are recorded in the Family Database, then at step 35 a check is made of whether the IDs represent a "new pair" for the Family Database 18 (using a similar definition of a "new pair"). If the pair is not new, then the process returns to step 33 via step 37. If the pair is new, then the process records the new pair in the Family Database in step 36, displays a "MULTIPLE IDENTITY ALERT" in step 40 on a display device (not shown) of the SIMBTS, and returns to step 31 after recording the date, time and location at step 38. At step 31 the process performs a historical search of the Main Database for whichever of the two IDs in the pair was "new" for the Family Database, and records any new associations in the Family Database in step 32.

Thus, after the 0th generation IDs (IMSI(0,1) and IMEI(0,1)) have been recorded, the next new IMSI is denoted IMSI(1,1) and the next new IMEI is denoted IMEI(1,1). These are denoted as 1^{st} generation IMSIs/IMEIs. As the process continues, a succession of generations may be built up, including the 2^{nd} generation, e^{th} generation and g^{th} generation shown in Figure 4.

Thus it can be seen by Figure 4 that the process records a network of generations of IMSIs and IMEIs, all associated directly or indirectly with a single selected IMSI(0,1). This gives an indication of all known occurrences of activity for a particular person during the time period of observation. Subsequently, the IMSIs in the Family Database 18 can be mapped to MSISDN numbers and lawful interception performed for a set of numbers that were not previously known. Alternatively, or in addition, the contents of the Family Database can be displayed on a display device (not shown) of the SIMBTS, or printed. The display or printout may simply be a list of IMSI/IMEI pairings, or may show a network of IMSI/IMEI pairings in the format illustrated in Figure 4.

The process described above in Figures 3 and 4 envisages a situation in which the network of Figure 4 is constructed initially (by performing a historical search) and then built up in real time as new IMSI/IMEI pairs are identified. Alternatively, the Family Database 18 may be omitted, and a search engine performs a "one-off" historical search (for instance in SQL) of the Main Database 17 to construct a network of the type illustrated in Figure 5. In the case of Figure 5 an IMSI has been used as the search key, and this IMSI has been associated with four IMEIs which in turn have each been associated with three other IMSIs. The network of Figure 5 is displayed, and any of the circles can be clicked on by a user to display the associated IMSI or IMEI number. The links between an IMSI/IMEI pair can be clicked on to display the date, time and location of all occurrences of that pair.

## Claims

1. A method of compiling a list of identifiers, IDs, associated with a mobile device user, the method including the steps of:
a) identifying and recording in the list (18) a first subscriber identifier, ID, (IMSI 1) and a first device ID (IMEI 1);
b) using the first subscriber ID as a first key to identify one or more second device IDs (IMEI 2), each of which has been associated with the first key in a mobile device communication; and
c) recording in the list (18) the one or more second device IDs; **characterized in** the further steps of:
d) using one of the one or more second device IDs (IMEI 2) as a second key to identify one or more further subscriber IDs (IMSI 5, IMSI 6, IMSI 7), each of which has been associated with the second key in a mobile device communication and is indirectly associated with the first key via the second key; and
e) recording in the list (18) the one or more further subscriber IDs.

2. A method of compiling a list of identifiers, IDs, associated with a mobile device user, the method including the steps of:
a) identifying and recording in the list (18) a first subscriber identifier, ID, (IMSI 1) and a first device ID (IMEI 1);
b) using the first device ID (IMEI 1) as a first key to identify one or more second subscriber IDs (IMSI 2), each of which has been associated with the first key in a mobile device communication; and
c) recording in the list (18) the one or more second subscriber IDs; **characterized in** the further steps of:
d) using one of the one or more second subscriber IDs (IMSI 2) as a second key to identify one more further device IDs (IMEI 5, IMEI 6, IMEI 7), each of which has been associated with the second key in a mobile device communication and is indirectly associated with the first key via the second key; and
e) recording in the list (18) the one or more further device IDs.

3. A method according to claim 1 or 2 further comprising displaying the first subscriber and device IDs and/or the one or more second device IDs and/or the one or more second subscriber IDs and/or the one or more further subscriber IDs and/or the one or more further device IDs.

4. A method according to any preceding claim further comprising displaying a network of said subscriber IDs and device IDs, the network including links indicative of associations between said subscriber IDs and device IDs.

5. A method of tracking a user comprising compiling a list of IDs by a method according to any of the preceding claims; and monitoring for the reception of any of the recorded device IDs or subscriber IDs.

6. A computer program product configured to:
a) use a first subscriber identifier, ID, (IMSI 1) as a first key to identify one or more device identifiers, IDs, (IMEI 2), each of which has been associated with the first key in a mobile device communication; and
b) record the one or more device IDs, **characterized in that** the search engine is further configured to:
c) use one of the one or more device IDs (IMEI 2) as a second key to identify one or more further subscriber IDs (IMSI 5, IMSI 6, IMSI 7), each of which has been associated with the second key in a mobile device communication and is indirectly associated with the first key via the second key; and
d) record the one or more further subscriber IDs.

7. A computer program product configured to:
a) use a first device identifier, ID, (IMEI 1) as a first key to identify one or more subscriber identifiers, IDs, (IMSI 2), each of which has been associated with the first key in a mobile device communication; and
b) record the one or more subscriber IDs, **characterized in that** the search engine is further configured to:
c) use one of the one or more subscriber IDs (IMSI 2) as a second key to identify one or more further device IDs (IMEI 5, IMEI 6, IMEI 7), each of which has been associated with the second key in a mobile device communication and is indirectly associated with the first key via the second key; and
d) record the one or more further device IDs.

8. Apparatus for compiling a list of identifiers, IDs, associated with a mobile device user, the apparatus including:
a) a storage device for recording in the list (18) a first subscriber identifier, ID, (IMSI 1) and a first device ID (IMEI 1); and
b) a processor configured to use the first subscriber ID (IMSI 1) as a first key to identify one or more second device IDs (IMEI 2), each of which has been associated with the first key in a mobile device communication, and record in the list (18) the one or more second device IDs, **characterized in that** the processor is further configured to use one of the one or more second device IDs as a second key to identify one or more further subscriber IDs (IMSI 5, IMSI 6, IMSI 7), each of which has been associated with the second key in a mobile device communication and is indirectly associated with the first key via the second key, and record in the list (18) the one or more further subscriber IDs.

9. Apparatus for compiling a list of identifiers, IDs, associated with a mobile device user, the apparatus including:
a) a storage device for recording a first subscriber identifier, ID, (IMSI 1) and a first device ID (IMEI 1); and
b) a processor configured to use the first device ID (IMEI 1) as a first key to identify one or more second subscriber IDs (IMSI 2), each of which has been associated with the first key in a mobile device communication, and record in the list (18) the one or more second subscriber IDs **characterized in that** the processor is further configured to use one of the one or more second subscriber IDs as a second key to identify one or more further device IDs (IMEI 5, IMEI 6, IMEI 7), each of which has been associated with the second key in a mobile device communication and is indirectly associated with the first key via the second key, and record in the list (18) the one or more further device IDs.

## Patentansprüche

1. Verfahren zum Zusammenstellen einer Liste von mit einem Mobilgerätebenutzer assoziierten Kennungen, wobei das Verfahren die folgenden Schritte beinhaltet:
a) Identifizieren und Aufzeichnen einer ersten Teilnehmerkennung (IMSI 1) und einer ersten Gerätekennung (IMEI 1) in der Liste (18),
b) Verwenden der ersten Teilnehmerkennung als einen ersten Schlüssel zur Identifizierung einer oder mehrerer zweiter Gerätekennungen (IMEI 2), von denen jede in einer Mobilgerätkommunikation mit dem ersten Schlüssel assoziiert worden ist, und
c) Aufzeichnen der einen oder mehreren zweiten Gerätekennungen in der Liste (18), **gekennzeichnet durch** die weiteren Schritte:
d) Verwenden einer der einen oder mehreren zweiten Gerätekennungen (IMEI 2) als einen zweiten Schlüssel zur Identifizierung einer oder mehrerer weiterer Teilnehmerkennungen (IMSI 5, IMSI 6, IMSI 7), von denen jede in einer Mobilgerätkommunikation mit dem zweiten Schlüssel assoziiert worden ist und über den zweiten Schlüssel indirekt mit dem ersten Schlüssel assoziiert ist, und
e) Aufzeichnen der einen oder mehreren weiteren Teilnehmerkennungen in der Liste (18).

2. Verfahren zum Zusammenstellen einer Liste von mit einem Mobilgerätebenutzer assoziierten Kennungen, wobei das Verfahren die folgenden Schritte beinhaltet:
a) Identifizieren und Aufzeichnen einer ersten Teilnehmerkennung (IMSI 1) und einer ersten Gerätekennung (IMEI 1) in der Liste (18),
b) Verwenden der ersten Gerätekennung (IMEI 1) als einen ersten Schlüssel zur Identifizierung einer oder mehrerer zweiter Teilnehmerkennungen (IMSI 2), von denen jede in einer Mobilgerätkommunikation mit dem ersten Schlüssel assoziiert worden ist, und
c) Aufzeichnen der einen oder mehreren zweiten Teilnehmerkennungen in der Liste (18), **gekennzeichnet durch** die weiteren Schritte:
d) Verwenden einer der einen oder mehreren zweiten Teilnehmerkennungen (IMSI 2) als einen zweiten Schlüssel zur Identifizierung einer oder mehrerer weiterer Gerätekennungen (IMEI 5, IMEI 6, IMEI 7), von denen jede in einer Mobilgerätkommunikation mit dem zweiten Schlüssel assoziiert worden ist und über den zweiten Schlüssel indirekt mit dem ersten Schlüssel assoziiert ist, und
e) Aufzeichnen der einen oder mehreren weiteren Gerätekennungen in der Liste (18).

3. Verfahren nach Anspruch 1 oder 2, das darüber hinaus das Anzeigen der ersten Teilnehmer- und Gerätekennung und/oder der einen oder mehreren zweiten Gerätekennungen und/oder der einen oder mehreren zweiten Teilnehmerkennungen und/oder der einen oder mehreren weiteren Teilnehmerkennungen und/oder der einen oder mehreren weiteren Gerätekennungen umfasst.

4. Verfahren nach einem der vorherigen Ansprüche, das darüber hinaus das Anzeigen eines Netzwerks der Teilnehmerkennungen und Gerätekennungen umfasst, wobei das Netzwerk Verknüpfungen enthält, die auf Assoziationen zwischen den Teilnehmerkennungen und den Gerätekennungen verweisen.

5. Verfahren zum Verfolgen eines Nutzers, umfassend das Zusammenstellen einer Liste von Kennungen durch ein Verfahren nach einem der vorherigen Ansprüche und Überwachen des Empfangs einer der aufgezeichneten Gerätekennungen oder Teilnehmerkennungen.

6. Computerprogrammprodukt, derart gestaltet, um:
a) eine erste Teilnehmerkennung (IMSI 1) als einen ersten Schlüssel zur Identifizierung einer oder mehrerer Gerätekennungen (IMEI 2) zu verwenden, von denen jede in einer Mobilgerätkommunikation mit dem ersten Schlüssel assoziiert worden ist, und
b) die eine oder mehreren Gerätekennungen aufzuzeichnen, **dadurch gekennzeichnet, dass** die Suchmaschine darüber hinaus derart gestaltet ist, um:
c) eine der einen oder mehreren Gerätekennungen (IMEI 2) als einen zweiten Schlüssel zur Identifizierung einer oder mehrerer weiterer Teilnehmerkennungen (IMSI 5, IMSI 6, IMSI 7) zu verwenden, von denen jede in einer Mobilgerätkommunikation mit dem zweiten Schlüssel assoziiert worden ist und über den zweiten Schlüssel indirekt mit dem ersten Schlüssel assoziiert ist, und
d) die eine oder mehreren weiteren Teilnehmerkennungen aufzuzeichnen.

7. Computerprogrammprodukt, derart gestaltet, um:
a) eine erste Gerätekennung (IMEI 1) als einen ersten Schlüssel zur Identifizierung einer oder mehrerer Teilnehmerkennungen (IMSI 2) zu verwenden, von denen jede in einer Mobilgerätkommunikation mit dem ersten Schlüssel assoziiert worden ist, und
b) die eine oder mehreren Teilnehmerkennungen aufzuzeichnen, **dadurch gekennzeichnet, dass** die Suchmaschine darüber hinaus derart gestaltet ist, um:
c) eine der einen oder mehreren Teilnehmerkennungen (IMSI 2) als einen zweiten Schlüssel zur Identifizierung einer oder mehrerer weiterer Gerätekennungen (IMEI 5, IMEI 6, IMEI 7) zu verwenden, von denen jede in einer Mobilgerätkommunikation mit dem zweiten Schlüssel assoziiert worden ist und über den zweiten Schlüssel indirekt mit dem ersten Schlüssel assoziiert ist, und
d) die eine oder mehreren weiteren Gerätekennungen aufzuzeichnen.

8. Gerät zum Zusammenstellen einer Liste von mit einem Mobilgerätebenutzer assoziierten Kennungen, wobei das Gerät enthält:
a) eine Speichervorrichtung zum Aufzeichnen einer ersten Teilnehmerkennung (IMSI 1) und einer ersten Gerätekennung (IMEI 1) in der Liste (18), und
b) einen Prozessor, derart gestaltet, um die erste Teilnehmerkennung (IMSI 1) als einen ersten Schlüssel zur Identifizierung einer oder mehrerer zweiter Gerätekennungen (IMEI 2) zu verwenden, von denen jede in einer Mobilgerätkommunikation mit dem ersten Schlüssel assoziiert worden ist, und die eine oder mehreren zweiten Gerätekennungen in der Liste (18) aufzuzeichnen, **dadurch gekennzeichnet, dass** der Prozessor darüber hinaus derart gestaltet ist, um eine der einen oder mehreren zweiten Gerätekennungen als einen zweiten Schlüssel zur Identifizierung einer oder mehrerer weiterer Teilnehmerkennungen (IMSI 5, IMSI 6, IMSI 7) zu verwenden, von denen jede in einer Mobilgerätkommunikation mit dem zweiten Schlüssel assoziiert worden ist und über den zweiten Schlüssel indirekt mit dem ersten Schlüssel assoziiert ist, und die eine oder mehreren weiteren Teilnehmerkennungen in der Liste (18) aufzuzeichnen.

9. Gerät zum Zusammenstellen einer Liste von mit einem Mobilgerätebenutzer assoziierten Kennungen, wobei das Gerät enthält:
a) eine Speichervorrichtung zum Aufzeichnen einer ersten Teilnehmerkennung (IMSI 1) und einer ersten Gerätekennung (IMEI 1), und
b) einen Prozessor, derart gestaltet, um die erste Gerätekennung (IMEI 1) als einen ersten Schlüssel zur Identifizierung einer oder mehrerer zweiter Teilnehmerkennungen (IMSI 2) zu verwenden, von denen jede in einer Mobilgerätkommunikation mit dem ersten Schlüssel assoziiert worden ist, und die eine oder mehreren zweiten Teilnehmerkennungen in der Liste (18) aufzuzeichnen, **dadurch gekennzeichnet, dass** der Prozessor darüber hinaus derart gestaltet ist, um eine der einen oder mehreren zweiten Teilnehmerkennungen als einen zweiten Schlüssel zur Identifizierung einer oder mehrerer weiterer Gerätekennungen (IMEI 5, IMEI 6, IMEI 7) zu verwenden, von denen jede in einer Mobilgerätkommunikation mit dem zweiten Schlüssel assoziiert worden ist und über den zweiten Schlüssel indirekt mit dem ersten Schlüssel assoziiert ist, und die eine oder mehreren weiteren Gerätekennungen in der Liste (18) aufzuzeichnen.

## Revendications

1. Procédé de compilation d'une liste d'identificateurs, ID, associés à un utilisateur de dispositif mobile, le procédé comprenant les étapes consistant à :
a) identifier et enregistrer dans la liste (18) un premier identificateur d'abonné, ID, (IMSI 1) et un premier ID de dispositif (IMEI 1) ;
b) utiliser le premier ID d'abonné comme une première clé pour identifier un ou plusieurs seconds ID de dispositif (IMEI 2), chacun ayant été associé à la première clé dans une communication de dispositif mobile ; et
c) enregistrer dans la liste (18) le ou les seconds ID de dispositif ; **caractérisé par** les autres étapes consistant à :
d) utiliser l'un du ou des seconds ID de dispositif (IMEI 2) comme une seconde clé pour identifier un ou plusieurs autres ID d'abonné (IMSI 5, IMSI 6, IMSI 7), chacun ayant été associé à la seconde clé dans une communication de dispositif mobile et étant indirectement associé à la première clé par le biais de la seconde clé ; et
e) enregistrer dans la liste (18) l'autre ou les autres ID d'abonné.

2. Procédé de compilation d'une liste d'identificateurs, ID, associés à un utilisateur de dispositif mobile, le procédé comprenant les étapes consistant à :
a) identifier et enregistrer dans la liste (18) un premier identificateur d'abonné, ID, (IMSI 1) et un premier ID de dispositif (IMEI 1) ;
b) utiliser le premier ID de dispositif (IMEI 1) comme une première clé pour identifier un ou plusieurs seconds ID d'abonné (IMSI 2), chacun ayant été associé à la première clé dans une communication de dispositif mobile ; et
c) enregistrer dans la liste (18) le ou les seconds ID d'abonné ; **caractérisé par** les autres étapes consistant à :
d) utiliser l'un du ou des seconds ID d'abonné (IMSI 2) comme une seconde clé pour identifier un ou plusieurs autres ID de dispositif (IMEI 5, IMEI 6, IMEI 7), chacun ayant été associé à la seconde clé dans une communication de dispositif mobile et étant indirectement associé à la première clé par le biais de la seconde clé ; et
e) enregistrer dans la liste (18) l'autre ou les autres ID de dispositif.

3. Procédé selon la revendication 1 ou 2 consistant en outre à afficher les premiers ID d'abonné et de dispositif et/ou le ou les seconds ID de dispositif et/ou le ou les seconds ID d'abonné et/ou l'autre ou les autres ID d'abonné et/ou l'autre ou les autres ID de dispositif.

4. Procédé selon l'une quelconque des revendications précédentes consistant en outre à afficher un réseau desdits ID d'abonné et ID de dispositif, le réseau comprenant des liens indicatifs des associations entre lesdits ID d'abonné et ID de dispositif.

5. Procédé de suivi d'un utilisateur consistant à compiler une liste d'ID au moyen d'un procédé selon l'une quelconque des revendications précédentes ; et à surveiller la réception d'un quelconque des ID de dispositif ou ID d'abonné enregistrés.

6. Produit de programme informatique configuré pour :
a) utiliser un premier identificateur d'abonné, ID, (IMSI 1) comme une première clé pour identifier un ou plusieurs identificateurs de dispositif, ID, (IMEI 2), chacun ayant été associé à la première clé dans une communication de dispositif mobile ; et
b) enregistrer le ou les ID de dispositif, **caractérisé en ce que** le moteur de recherche est en outre configuré pour :
c) utiliser l'un du ou des ID de dispositif (IMEI 2) comme une seconde clé pour identifier l'autre ou les autres ID d'abonné (IMSI 5, IMSI 6, IMSI 7), chacun ayant été associé à la seconde clé dans une communication de dispositif mobile et étant indirectement associé à la première clé par le biais de la seconde clé ; et
d) enregistrer l'autre ou les autres ID d'abonné.

7. Produit de programme informatique configuré pour :
a) utiliser un premier identificateur de dispositif, ID, (IMEI 1) comme une première clé pour identifier un ou plusieurs identificateurs d'abonné, ID, (IMSI 2), chacun ayant été associé à la première clé dans une communication de dispositif mobile ; et
b) enregistrer le ou les ID d'abonné, **caractérisé en ce que** le moteur de recherche est en outre configuré pour :
c) utiliser l'un du ou des ID d'abonné (IMSI 2) comme une seconde clé pour identifier l'autre ou les autres ID de dispositif (IMEI 5, IMEI 6, IMEI 7), chacun ayant été associé à la seconde clé dans une communication de dispositif mobile et étant indirectement associé à la première clé par le biais de la seconde clé ; et
d) enregistrer l'autre ou les autres ID de dispositif.

8. Appareil pour compiler une liste d'identificateurs, ID, associés à un utilisateur de dispositif mobile, l'appareil comprenant :
a) un dispositif de stockage pour enregistrer dans la liste (18) un premier identificateur d'abonné, ID, (IMSI 1) et un premier ID de dispositif (IMEI 1) ; et
b) un processeur configuré pour utiliser le premier ID d'abonné (IMSI 1) comme une première clé pour identifier un ou plusieurs seconds ID de dispositif (IMEI 2), chacun ayant été associé à la première clé dans une communication de dispositif mobile, et enregistrer dans la liste (18) le ou les seconds ID de dispositif, **caractérisé en ce que** le processeur est en outre configuré pour utiliser l'un du ou des seconds ID de dispositif comme une seconde clé pour identifier un ou plusieurs autres ID d'abonné (IMSI 5, IMSI 6, IMSI 7), chacun ayant été associé à la seconde clé dans une communication de dispositif mobile et étant indirectement associé à la première clé par le biais de la seconde clé, et enregistrer dans la liste (18) l'autre ou les autres ID d'abonné.

9. Appareil pour compiler une liste d'identificateurs, ID, associés à un utilisateur de dispositif mobile, l'appareil comprenant :
a) un dispositif de stockage pour enregistrer un premier identificateur d'abonné, ID, (IMSI 1) et un premier ID de dispositif (IMEI 1) ; et
b) un processeur configuré pour utiliser le premier ID de dispositif (IMEI 1) comme une première clé pour identifier un ou plusieurs ID d'abonné (IMSI 2), chacun ayant été associé à la première clé dans une communication de dispositif mobile et enregistrer dans la liste (18) le ou les seconds ID d'abonné **caractérisé en ce que** le processeur est en outre configuré pour utiliser l'un du ou des seconds ID d'abonné comme une seconde clé pour identifier un ou plusieurs autres ID de dispositif (IMEI 5, IMEI 6, IMEI 7), chacun ayant été associé à la seconde clé dans une communication de dispositif mobile et étant indirectement associé à la première clé par le biais de la seconde clé et enregistrer dans la liste (18) l'autre ou les autres ID de dispositif.
